# EUROPEAN PATENT SPECIFICATION

(11) **EP 3 015 934 B1**
(45) Date of publication and mention of the grant of the patent: **28.11.2018**
(21) Application number: 14190988.7
(22) Date of filing: 30.10.2014
(51) Int. Cl.: G05B 19/418

(54) **Method for suggesting a plurality of screens, method and system for storing one or more screens**
Verfahren zum Vorschlagen einer Vielzahl von Bildschirmen, Verfahren und System zum Speichern eines oder mehrerer Bildschirme
Procédé pour suggérer une pluralité d'écrans, procédé et système pour stocker un ou plusieurs écrans

(43) Date of publication of application: 04.05.2016
(73) Proprietor: Siemens Aktiengesellschaft, 80333 München (DE)
(72) Inventor: Ramanathan, Rathinakumar, 560068 Bangalore, Karnataka (IN); Tiruveedula, Bhaskar Babu, 560029 Bangalore, Karnataka (IN); Kumar, Prashant, 560095 Bangalore, Karnataka (IN)
(74) Representative: Isarpatent

(56) References cited:
- US-A1- 2008 040 677
- US-A1- 2008 092 131
- US-A1- 2011 093 800

## Description

The present invention relates to a method for generating runtime objects and HMI screens and more particularly, to a method for generating runtime user interface objects and HMI screens based on user actions in an industrial automation system. In particular, the present invention relates to methods for suggesting one or more screens.

Industrial automation systems, such as those used for manufacturing various articles of manufacture and/or controlling and monitoring processes, are inherently based on various engineering applications that are developed in software management systems and also known as engineering systems.

In an industrial automation system, human machine interface (HMI) is a medium for information exchange, data sharing and/or mutual communication between electromechanical, electrical and/or mechanical automated systems and the user. It allows the user to update system settings and/or configuring the systems through various interaction means like touchable images or keys on the user-friendly window. The HMI includes display means for displaying system settings along with multiple run-time objects, commonly known as HMI screen.

HMI screens play a significant role in creating a visual environment between the user and the technology. Designing HMI screens is an important and challenging task. Various aspects of designing HMI screens, to meet the quality criteria, like ease and seamless user understanding, efficiency of learning the HMI design software tools and satisfaction of the operators to control large systems. There are several issues are associated with the designing various sections of the HMI screens like screen layout, colour representation, graphics and pictures, text and data values, alarms, navigation, control and so on.

A huge number of HMI screens are needed to be designed for an automation system. The number of required HMI screens depends on plant and/or engineering requirements of the automation system. For designing each HMI screen, a user has to create and parameterize each and every runtime object in the HMI screen by using a screen editor. The runtime objects of the HMI screens include, but not limited to, button, gauge, user view and so on. A static library is available for designing HMI screens. The static library stores runtime objects that are used for designing the HMI screens. The user calls the runtime objects stored in the static library for designing multiple HMI screens with the help of the screen editor.

Multiple HMI screens are needed to be created for an automated system. Users have to spend lot of time in creating the HMI screens and runtime objects repetitively for each HMI screen. In other words, there is no option available for automatic saving the runtime objects and the HMI screens created by the user by using the editor to avoid repetitively creation of similar or closely related runtime objects and screens. Also there is not any provision disclosed in the state of the art, for sharing runtime objects and screens, which are created and ready to use, among the users of multiple users and multiple system designing environment including, but not limited to distributed control system.

More specifically, there is no method and/or system available in the state of the art that allows users to store and share the HMI screens and runtime objects created as a part of a design project. The state of the art only suggest the use of static library to store runtime objects that can be used for creating HMI screens but there is no provision for saving the created HMI screens in a library and can be used further to avoid repetitive designing of runtime objects. In present scenario, the users have to create runtime objects for each HMI screen which takes a good amount of time that in turns leads to the higher cost of the design project.

US2008/092131A1 discloses a method for centrally managing HMI applications within an application environment potentially comprising many networked HMI nodes running separate instances of a previously defined HMI application. According to the method, description of an HMI application is encapsulated within a reusable HMI application template. Thereafter, HMI application objects are instantiated from the HMI application template and installed on designated networked HMI node. The method also enables the users to edit an existing HMI application template from a remotely deployed configuration tool.

US2011/093800A1 discloses a development framework for developing a graphical user interface (GUI) application. The development framework comprises a GUI modeling which receives GUI components and transforms the GUI components into GUI component function blocks. The development framework also comprises a GUI development component which generates a GUI function block network by linking one GUI component function block with another GUI component function block. The development framework enables editing the GUI function block network.

US2008/040677A1 discloses an HMI development support apparatus which supports development of a display screen regarding a HMI. The apparatus creates layout of the display screen comprising a graphic component having graphic data or an image component having image data based on operational information. The apparatus also creates an image for either the graphical component or the image component based on the operation information.

From the foregoing description it is evident that there is a strong need of a method and system for automatic saving of the created HMI screens which can be used for designing a similar kind of another HMI screen.

It is therefore an object of the present invention to provide a method and a system for storing runtime objects and HMI screens along with selecting for reuse of runtime objects and HMI screens.

The object is achieved by providing a method for suggesting a plurality of screens for creating at least one screen according to claim 1. Further embodiments of the present invention are addressed in the dependent claims.

The present invention is further described hereinafter with reference to illustrated embodiments shown in the accompanying drawings, in which:
- FIG 1: illustrates a system for storing runtime objects and screens in accordance with an embodiment of the present invention, and
- FIG 2: illustrates a flow chart for a method for suggesting and selecting HMI screens in accordance with an embodiment of the present invention.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

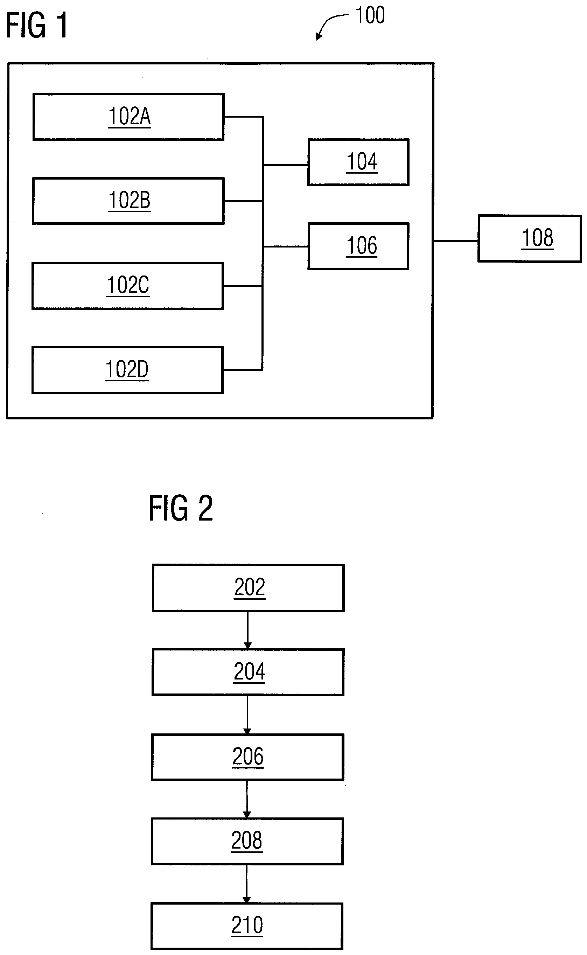

Referring to FIG 1, a system for storing runtime objects and screens 100 is illustrated.

The system 100 includes one or more editors 102A, 102B, 102C, 102D, a screen module 104, a runtime object module 106 and a server 108. One or more users create various HMI screens and runtime objects associated with each HMI screen by using the one or more editors 102A, 102B, 102C, 102D, the screen module 104 and the runtime object module 106. The one or more users also configure and parameterize the HMI screens and the runtime objects by using the screen module 104 and the runtime object module 106 through the one or more editors 102A, 102B, 102C, 102D, as shown in FIG 1. The HMI screens and the runtime objects created by the one or more users are stored in the server 108. The server 108 also stores the details of each screen i.e. configuration and parameterization of the screens created by the one or more users with the help of the screen module 104 and the runtime object module 106. The server 108 also stores the information of each user of the one or more users who creates and/or responsible for a screen created by using an editor of the one or more editors 102A, 102B, 102C, 102D. In a preferred embodiment of the present invention the number of one or more editors associated with the system for storing runtime objects and screens 100 may change dynamically depending upon the requirements of the automation system. In another embodiment of the present invention the server 108 includes at least one database to store information in one or more formats known in the state of the art.

Now referring to FIG 2, a flow chart for a method for suggesting and selecting HMI screens is illustrated in accordance with an embodiment of the present invention.

At step 202, one or more users create and configure a HMI screen and one or more runtime objects by using the screen module 104 and the runtime object module 106, illustrated in FIG 1. The preferred and alternate methods for creating and configuring the one or more HMI screens and the one or more runtime objects are explained in preceding figures.

At step 204, based on the one or more runtime objects created by the one or more users for the HMI screen, multiple runtime objects are searched by the runtime object module 106 in the server 108 that can be used along with the created runtime objects for the HMI screen.

At step 206, the screen module 104 searches for partial or completely similar type of one or more HMI screens saved in the serve 108 on the basis of the one or more runtime objects created for the HMI screen.

At step 208, the screen module 104 and the runtime object module 106 suggests the searched one or more HMI screens and the one or more runtime objects, that can be used for creating the HMI screen, to the one or more users. In a preferred embodiment the one or more users receive suggestions from the screen module 104 and the runtime object module 106 based on a historical data of the one or more users stored in the server 108.

At step 210, the one or more editors 102A, 102B, 102C, 102D facilitates the one or more users to select the one or more HMI screens and the one or more runtime objects suggested by the screen module 104 and the runtime object module 106. In a preferred embodiment of the present invention, an action of selecting or rejecting the suggested the one or more HMI screens and the one or more runtime objects by the one or more users are stored in the server 108 as the historical data of the one or more users.

It is evident from the foregoing description of the present invention that the invention provides a method and a system for storing the created HMI screens along with the runtime objects in a server that can be used by the one or more users designing similar type of HMI screen.

The present invention also discloses a method and a system for suggesting a user multiple HMI screens and runtime objects, stored in a server, which can be used during the designing of a HMI screen.

The method and architecture disclosed in the present invention facilitates the users to quickly design efficient and accurate HMI screens.

Also, the present invention provides an easy and hassle-free method and system for designing HMI screens.

While the present invention has been described in detail with reference to certain embodiments, it should be appreciated that the present invention is not limited to those embodiments. In view of the present disclosure, many modifications and variations would present themselves, to those of skill in the art without departing from the scope of various embodiments of the present invention, as described herein. The scope of the present invention is, therefore, indicated by the following claims rather than by the foregoing description.

## Claims

1. A method for suggesting a plurality of screens for creating at least one screen, the method comprising:
- creating at least one runtime object at one or more editors (102A, 102B, 102C, 102D);
- searching one or more runtime objects in at least one database based on the at least one runtime object created at the one or more editors (102A, 102B, 102C, 102D);
- searching one or more screens in the at least one database based on the at least one runtime object, wherein the one or more screens have the at least one runtime object;
- suggesting the one or more runtime objects and the one or more screens in the one or more editors (102A, 102B, 102C, 102D); and
- selecting at least one runtime object from the one or more runtime objects and selecting at least one screen from the one or more screens for creating the at least one screen.

2. The method according to claim 1 wherein identifying the at least one runtime object further comprises a step of identifying configuration of the at least one runtime object.

3. The method according to any of the preceding claims wherein identifying the at least one runtime object further comprises a step of identifying parameterization of the at least one runtime object.

4. The method according to any of the preceding claims wherein the one or more runtime objects are associated with the at least one runtime object with respect to at least one parameter of the at least one runtime object.

5. The method according to any of the preceding claims wherein the one or more runtime objects are associated with the at least one runtime object with respect to at least one configuration setting of the at least one runtime object.

6. The method according to any of the preceding claims further comprises a step of searching a plurality of screens in the at least one database wherein the first set of one or more screens have at least one of the one or more runtime objects.

## Patentansprüche

1. Verfahren zum Vorschlagen einer Mehrzahl von Bildschirmen zum Erzeugen von mindestens einem Bildschirm, wobei das Verfahren umfasst:
- Erzeugen von mindestens einem Laufzeitobjekt an einem oder mehreren Editoren (102A, 102B, 102C, 102D);
- Suchen nach einem oder mehreren Laufzeitobjekten in mindestens einer Datenbank, basierend auf dem mindestens einen an dem einen oder mehreren Editoren (102A, 102B, 102C, 102D) erzeugten Laufzeitobjekt;
- Suchen nach einem oder mehreren Bildschirmen in der mindestens einen Datenbank, basierend auf dem mindestens einen Laufzeitobjekt, wobei der eine Bildschirm oder die mehreren Bildschirme das mindestens eine Laufzeitobjekt aufweisen;
- Vorschlagen des einen Laufzeitobjekts oder der mehreren Laufzeitobjekte und des einen oder der mehreren Bildschirme in dem einen oder den mehreren Editoren (102A, 102B, 102C, 102D); und
- Auswählen von mindestens einem Laufzeitobjekt aus dem einen oder den mehreren Laufzeitobjekten und Auswählen von mindestens einem Bildschirm aus dem einen oder den mehreren Bildschirmen zum Erzeugen des mindestens einen Bildschirms.

2. Verfahren nach Anspruch 1, wobei das Identifizieren des mindestens einen Laufzeitobjekts ferner einen Schritt des Identifizierens der Konfiguration des mindestens einen Laufzeitobjekts umfasst.

3. Verfahren nach einem der vorstehenden Ansprüche, wobei das Identifizieren des mindestens einen Laufzeitobjekts ferner einen Schritt des Identifizierens der Parametrierung des mindestens einen Laufzeitobjekts umfasst.

4. Verfahren nach einem der vorstehenden Ansprüche, wobei das eine oder die mehreren Laufzeitobjekte in Bezug auf mindestens einen Parameter des mindestens einen Laufzeitobjekts mit dem mindestens einen Laufzeitobjekt assoziiert sind.

5. Verfahren nach einem der vorstehenden Ansprüche, wobei das eine oder die mehreren Laufzeitobjekte in Bezug auf mindestens eine Konfigurationseinstellung des mindestens einen Laufzeitobjekts mit dem mindestens einen Laufzeitobjekt assoziiert sind.

6. Verfahren nach einem der vorstehenden Ansprüche, das ferner einen Schritt der Suche nach einer Mehrzahl von Bildschirmen in der mindestens einen Datenbank umfasst, wobei die erste Gruppe von einem oder mehreren Bildschirmen mindestens eines des einen oder der mehreren Laufzeitobjekte aufweist.

## Revendications

1. Procédé de suggestion d'une pluralité d'écrans pour créer au moins un écran, le procédé comprenant :
- la création d'au moins un objet d'exécution au niveau d'un ou plusieurs éditeurs (102A, 102B, 102C, 102D) ;
- la recherche d'un ou plusieurs objets d'exécution dans au moins une base de données sur la base de l'au moins un objet d'exécution créé au niveau du ou des éditeurs (102A, 102B, 102C, 102D) ;
- la recherche d'un ou plusieurs écrans dans l'au moins une base de données sur la base de l'au moins un objet d'exécution, le ou les écrans ayant l'au moins un objet d'exécution ;
- la suggestion du ou des objets d'exécution et du ou des écrans dans le ou les éditeurs (102A, 102B, 102C, 102D) ; et
- la sélection d'au moins un objet d'exécution parmi le ou les objets d'exécution et la sélection d'au moins un écran parmi le ou les écrans pour créer l'au moins un écran.

2. Procédé selon la revendication 1, l'identification de l'au moins un objet d'exécution comprenant en outre une étape d'identification de la configuration de l'au moins un objet d'exécution.

3. Procédé selon l'une quelconque des revendications précédentes, l'identification de l'au moins un objet d'exécution comprenant en outre une étape d'identification du paramétrage de l'au moins un objet d'exécution.

4. Procédé selon l'une quelconque des revendications précédentes, le ou les objets d'exécution étant associés à l'au moins un objet d'exécution par rapport à au moins un paramètre de l'au moins un objet d'exécution.

5. Procédé selon l'une quelconque des revendications précédentes, le ou les objets d'exécution étant associés à l'au moins un objet d'exécution par rapport à au moins un réglage de configuration de l'au moins un objet d'exécution.

6. Procédé selon l'une quelconque des revendications précédentes comprenant en outre une étape de recherche dans une pluralité d'écrans dans l'au moins une base de données, le premier ensemble d'un ou de plusieurs écrans ayant au moins un du ou des objets d'exécution.
